# EUROPÄISCHE PATENTANMELDUNG

(11) **EP 4 601 260 A1**
(43) Veröffentlichungstag der Anmeldung: **13.08.2025**
(21) Anmeldenummer: 24156283.4
(22) Anmeldetag: 07.02.2024
(51) Int. Cl.: H04L 67/02, G06N 20/00, H04L 69/22

(54) **VERFAHREN UND SYSTEM ZUM ERKENNEN EINES ANWENDUNGSSCHNITTSTELLEN - ENDPUNKTES**

(71) Anmelder: Deutsche Telekom AG, 53113 Bonn (DE)
(72) Erfinder: Zimmermann, Philipp, 95030 Hof (DE); Lippmann, Nico, 32351 Stemwede (DE); Kloth, Mathias, 51429 Bergisch Gladbach (DE)
(74) Vertreter: Braun-Dullaeus Pannen Emmerling Patent- & Rechtsanwaltspartnerschaft mbB

(57) **Zusammenfassung**

Die Erfindung betrifft ein Verfahren zum Erkennen eines Anwendungsschnittstellen - Endpunktes, wobei die Netzwerk - Adresse eines potentiellen Anwendungsschnittstellen - Endpunkts erzeugt wird, wobei versucht wird, über ein Netzwerkprotokoll zu der erzeugten Netzwerk - Adresse des potentiellen Anwendungsschnittstellen - Endpunkts eine Verbindung aufzubauen und wobei ein Ergebnis des Verbindungsaufbau - Versuchs dahingehend ausgewertet wird, mit welcher Wahrscheinlichkeit die erzeugte Netzwerk - Adresse ein Anwendungsschnittstellen - Endpunkt ist. Darüber hinaus betrifft die Erfindung ein System zur Durchführung des Verfahrens, aufweisend einen Anwendungsschnittstellen - Generator, einen Collector und einen Klassifizieren

## Beschreibung

Die Erfindung betrifft ein Verfahren zum Erkennen eines Anwendungsschnittstellen - Endpunktes, wobei die Netzwerk - Adresse eines potentiellen Anwendungsschnittstellen - Endpunkts erzeugt wird, wobei versucht wird, über ein Netzwerkprotokoll zu der erzeugten Netzwerk - Adresse des potentiellen Anwendungsschnittstellen - Endpunkts eine Verbindung aufzubauen und wobei ein Ergebnis des Verbindungsaufbau-Versuchs dahingehend ausgewertet wird, mit welcher Wahrscheinlichkeit die erzeugte Netzwerk - Adresse ein Anwendungsschnittstellen - Endpunkt ist. Darüber hinaus betrifft die Erfindung ein System zur Durchführung des Verfahrens, aufweisend einen Anwendungsschnittstellen - Generator, einen Collector und einen Klassifizierer.

Die Sicherheit der immer komplexer werdenden Netzwerke hat mittlerweile eine überragende Bedeutung für die das jeweilige Netzwerk betreibenden Unternehmen. Die Untersuchung von Unternehmen bzgl. Sicherheits-Schwachstellen zeigte in der jüngsten Vergangenheit, dass von den Unternehmen genutzte application programming interfaces (API) hierbei immer relevanter werden.

Bei einer Anwendungsschnittstelle respektive API handelt sich um eine Software-Schnittstelle, die einer anderen Software Zugriff anbietet, beispielsweise auf einen über die Schnittstelle ansprechbaren Dienst. Die Anwendungsschnittstelle wird im Weiteren als Anwendungsschnittstellen - Endpunkt bezeichnet und ist über eine spezifische Adresse im jeweiligen Netzwerk ansprechbar. Mit der Netzwerk - Adresse ist die Resource gemeint, unter der eine API ansprechbar ist.

Derartige Anwendungsschnittstellen - Endpunkte werden in Unternehmen unter anderem dafür genutzt, um Kundendaten, Details zu Aufträgen oder den Lieferstatus von Geräten abzufragen.

Bei der Implementierung einer Anwendungsschnittstellen - Endpunktes gibt es für die jeweiligen Entwickler leider oft keine bindenden Vorgaben. Dadurch sind viele Anwendungsschnittstellens eines Netzwerks mit der Zeit gewachsen und undurchsichtiger geworden. Dies stellt Sicherheitsforscher und die für die Sicherheit des jeweiligen Netzwerks Verantwortlichen vor verschiedene Herausforderungen.

Für einen Menschen ist es meist sehr schnell überprüfbar, ob es sich bei einer Netzwerk-Adresse um einen Anwendungsschnittstellen - Endpunkt handelt. Aufgrund der Vielzahl von potentiellen Anwendungsschnittstellen - Endpunkten ist dies aber bei den zunehmend immer komplexer werdenden Netzwerken, wie sie beispielsweise von größeren Unternehmen und Konzernen unterhalten werden, sehr zeitaufwendig.

Eine Automatisierung der Suche ist nicht einfach möglich. Das Problem einer automatischen regelbasierten Suche ist, dass es keine Vorgaben gibt, wie eine Anwendungsschnittstellen auf Eingaben reagieren soll. So kann nicht immer davon ausgegangen werden, dass auf gleiche Anfragen die gleiche Antwort kommt. Dadurch ist es schwierig bis unmöglich, aufgrund der Antworten mit statischen Regeln eine Klassifizierung als Anwendungsschnittstellen durchzuführen.

Die Aufgabe der Erfindung ist, trotz dieses Problems die Suche und Identifikation einer Anwendungsschnittstelle stärker zu automatisieren.

Eine große Herausforderung ist dabei, möglichst alle zu einem Unternehmen oder dem zu untersuchenden Netzwerk zugehörigen Anwendungsschnittstellen - Endpunkt zu finden.

Um dieses Problem zu lösen, wird das erfindungsgemäße Verfahren gemäß Anspruch 1 vorgeschlagen. Einige der bevorzugten Ausführungsformen des erfindungsgemäßen Verfahrens werden in den von Anspruch 1 abhängigen Ansprüchen genannt. Ein das erfindungsgemäße Verfahren ausführendes System wird mit Anspruch 12 gefasst.

Ein wesentlicher Grundgedanke der Erfindung ist es, zum Auffinden von unbekannten Anwendungsschnittstellen - Endpunkten nicht das gesamte zu untersuchende Netzwerk mittels automatischer regelbasierter Suche zu scannen, sondern trotz hoher Automatisierung gezielt vorzugehen.

Hierzu muss ein Weg gefunden werden, wie nach potentiellen Anwendungsschnittstellen - Endpunkten gesucht werden kann. Daran anschließend muss validiert werden, ob über den gefundenen potentiellen Anwendungsschnittstellen - Endpunkt nun eine Anwendungsschnittstelle ansprechbar ist oder nicht.

Erfindungsgemäß umgesetzt wir dies durch das Erzeugen respektive Generieren einer Netzwerk - Adresse eines potentiellen Anwendungsschnittstellen - Endpunkts. Diese wird in dem zu untersuchenden Netzwerk angesprochen und das Ergebnis dahingehend ausgewertet, ob die angesprochene Netzwerk - Adresse ein Anwendungsschnittstellen - Endpunkte sein könnte oder nicht. Statt eines ansonsten erforderlichen allgemeinen Scans des zu untersuchenden Netzwerks ermöglicht das erfindungsgemäße Vorgehen, gezielt einzelne Netzwerk - Adressen potentieller Anwendungsschnittstellen - Endpunkte an zu sprechen, was wesentlich ressourcenschonender ist.

Zur besseren Erläuterung wird das Verfahren zum Erkennen eines Anwendungsschnittstellen - Endpunktes gemäß Anspruch 1 in drei Verfahrensschritte unterteilt, die einzeln beschrieben werden. Dies bedeutet lediglich, dass eine Unterteilung des Verfahrens wie auch des Systems in grundlegende logische Komponenten erfolgt. Die einzelnen Verfahrensschritte respektive logische Komponenten können von einem Rechner bzw. Rechennetzwerk, aber auch von physikalisch oder sogar örtlich voneinander getrennten Rechnern bzw. Rechennetzwerken abgearbeitet werden.

Diese grundlegenden logischen Komponenten des Verfahrens bzw. des Systems sind:
1. Der Anwendungsschnittstellen - Generator zur Erzeugung der Netzwerk-Adresse des potentiellen Anwendungsschnittstellen - Endpunkts,
2. der Collector zum Aufbauen einer Verbindung zu der erzeugten Netzwerk-Adresse des potentiellen Anwendungsschnittstellen - Endpunkts über ein Netzwerkprotokoll, und
3. der Klassifizierer zum Auswerten des Ergebnisses des Verbindungsaufbau-Versuchs, dahingehenden, mit welcher Wahrscheinlichkeit die erzeugte Netzwerk-Adresse ein Anwendungsschnittstellen - Endpunkt ist.

Diese drei logischen Komponenten und ihre vorteilhaften Ausführungsformen werden im Folgenden näher erläutert.

### 1. Anwendungsschnittstellen - Generator

Die Aufgabe des Anwendungsschnittstellen - Generators ist es, neue Anwendungsschnittstellen - Endpunkte eines Netzwerkes zu generieren, die bisher unbekannt sind. Mit unbekannt ist gemeint, dass diese Anwendungsschnittstellen - Endpunkte nicht in einer zur Verfügung stehenden Dokumentation des zu untersuchenden Netzwerkes oder seiner Anwendungsschnittstellen - Endpunkte aufgelistet sind, infolge dem für die Sicherheit des jeweiligen Netzwerks Verantwortlichen keine Information über sie vorliegen und sie deshalb erst einmal gefunden werden müssen.

Vorzugsweise werden Muster und/oder Sequenzen bekannter/existierender Anwendungsschnittstellen -Endpunkte zum Erzeugen der Netzwerk-Adresse eines potentiellen Anwendungsschnittstellen - Endpunkts genutzt.

Eine solche Muster- und/oder Sequenz - Erkennung wird im Folgenden beispielhaft erläutert. Sind beispielsweise die Anwendungsschnittstellen - Endpunkte "/api/v1/login" und "/api/v2/logout" bekannt, so soll der Anwendungsschnittstellen - Generator das Muster des Aufbaus der Netzwerk - Adresse verstehen und zum Beispiel folgende Anwendungsschnittstellen - Endpunkte generieren: "/api/v2/login", "/api/v1/logout" oder "/v1/login". Ein weiteres Beispiel für die Mustererkennung im gegebenen Beispiel ist die Generierung von Anwendungsschnittstellen - Endpunkten mit einem v0, einem v3 und höheren Ziffern in der Adress-Sequenz. Mit dem Verstehen der Sequenz der Netzwerk - Adresse ist gemeint, dass die der Netzwerk - Adresse zu Grunde liegende Grammatik erkannt oder erlernt wird, hierunter fällt beispielsweise das Erkennen des Schrägstrichs (/) als Trennungszeichen zwischen den Stufen der obigen Verzeichnisstruktur oder dessen Erlernen.

Hierüber wird der Anwendungsschnittstellen Generator in der Lage versetzt, potentiell neue, unbekannte Anwendungsschnittstellen - Endpunkte zu generieren, die dem Muster und oder der Sequenz der bekannten Anwendungsschnittstellen - Endpunkte entsprechen.

In einer bevorzugten Ausführungsform wird die Netzwerk-Adresse eines potentiellen Anwendungsschnittstellen - Endpunkts von einem ersten Machine Learning Algorithmus, insbesondere von einem LSTM - Algorithmus, erzeugt. Der Machine Learning Algorithmus Long-Short-Term-Memory (LSTM) ist besonders geeignet, auf Sequenzen trainiert zu werden und kann dann Neue produzieren.

Von besonderem Vorteil ist es dabei, wenn als Trainingsdaten für den ersten Machine Learning Algorithmus Daten existierender Anwendungsschnittstellen - Endpunkte genutzt werden. Von diesen Trainingsdaten kann der Algorithmus die Grammatik besonders einfach erlernen. Diese Daten können Teile allgemeiner Anwendungsschnittstellen - Endpunkte sein (z.B. "/login", "/logout", ...).

Von besonderem Vorteil ist es auch, wenn die Muster und/oder Sequenzen der Netzwerk-Adressen bekannter oder existierender Anwendungsschnittstellen - Endpunkte auf eine spezielle Anwendung und/oder ein Unternehmen angepasst werden (z.B. "/produkt_A/prod/login", "/unternehmen_B/produkt_C/search", ...). Durch das Verwenden von Machine Learning ist es möglich, den Anwendungsschnittstellen - Generator besonders auf verschiedene Anwendungen und/oder Netzwerke anpassen zu können.

In einer hierzu alternativen oder ergänzenden Ausführungsform wird zum Erzeugen der Netzwerk - Adresse eines potentiellen Anwendungsschnittstellen -Endpunkts ein Teil der Netzwerk - Adresse anhand einer Liste von Wörtern bestimmt, wobei versucht wird, über ein Netzwerkprotokoll zu diesem bestimmten Teil der Netzwerk - Adresse eine Verbindung aufzubauen und wobei die Liste von Wörtern insbesondere auf eine Anwendung und/oder ein Unternehmen angepasst wird.

Bei dieser Methode werden Netzwerk - Adressen potentieller Anwendungsschnittstellen - Endpunkte über eine Art Raten herausgefunden. Dabei wird ein Wörterbuch benötigt, welches Wörter wie "login", "logout", "admin", etc. enthält. Diese Wörter werden dann nacheinander abgefragt und man erhält ggf. eine Antwort vom angefragten Endpunkt. Ist ein Wort gefunden, wird vorzugsweise rekursiv weiter gesucht ("/admin" wurde gefunden - "/admin/login" und "/admin/logout" werden abgefragt).

Diese Wörterbuch - Methode ist aber sehr viel langsamer als die Methode mittels des zuvor beschriebenen Machine Learning Algorithmus. Aufgrund des deutlich höheren Netzwerk-Verkehrs verbraucht sie mehr Ressourcen und ist auch nicht im gleichen Rahmen adaptiv.

Die Ausgabe des Anwendungsschnittstellen - Generators ist die Zusammenstellung von einem oder mehreren potentiellen Anwendungsschnittstellen Endpunkten, die nun an die zweite logische Komponente, den Collector übergeben und von diesem für den weiteren Verfahrensablauf genutzt werden.

### 2. Collector

Das Ziel des Collectors ist eine möglichst einfache Datenerhebung. Dafür wird jede vom Anwendungsschnittstellen - Generator erzeugte Netzwerk - Adresse eines potentiellen Anwendungsschnittstellen - Endpunkts angefragt. Die Daten, die durch das Ansprechen dieser Netzwerk - Adressen erhoben werden können, sind unter anderen folgende:
- Response Code,
- Header,
- Content, und/oder
- Response Time.

Vorzugsweise wird das Ergebnis des Verbindungsaufbau-Versuchs, insbesondere eine Antwort des potentiellen Anwendungsschnittstellen - Endpunktes auf den Verbindungsaufbau - Versuch, gespeichert. Dies kann zu Dokumentationszwecken erfolgen, aber auch, um weitere Trainingsdaten für den Machine Learning Algorithmus zu generieren.

In einer bevorzugten Ausführungsform wird bei einer empfangenen Antwort auf den Verbindungsaufbau - Versuch zu einer per Wörterbuch - Methode erzeugten Netzwerk-Adresse versucht, auf den Teil der Netzwerk-Adresse rekursiv aufbauend die Netzwerk - Adresse eines potentiellen Anwendungsschnittstellen - Endpunkts zu erzeugen und diese an zu fragen.

Das Ergebnis des Verbindungsaufbau - Versuchs kann aber auch in keiner Reaktion bestehen. In diesem Fall kann davon ausgegangen werden, dass unter dieser Netzwerk - Adresse kein Anwendungsschnittstellen - Endpunkt zu erreichen ist.

Die als Antwort auf das Ansprechen der Netzwerk - Adresse erhaltenen Daten werden vorzugsweise vollständig an den Klassifizierer weitergegeben.

### 3. Klassifizierer

Das Ziel des Klassifizierers ist es, die Daten des Collectors zu interpretieren und eine Aussage zu treffen, mit welche Wahrscheinlichkeit der generierte Anwendungsschnittstellen - Endpunkt tatsächlich eine Anwendungsschnittstelle ist.

Vorzugsweise wird zur Bestimmung der Wahrscheinlichkeit ein zweiter Machine Learning Algorithmus, insbesondere ein hierfür sehr geeignetes Feed-Forward Neural Network, genutzt. Als Trainingsdaten werden neben Daten von bereits existierenden Anwendungsschnittstellen - Endpunkten auch Daten von Endpunkten benötigt, die keine Anwendungsschnittstellen - Endpunkte sind.

Vorzugsweise werden hierzu vom Collector gesammelte Daten herangezogen. Dadurch ist der Algorithmus in der Lage Muster zu lernen, wie die vom Collector erfassten Daten aussehen, wenn eine Anwendungsschnittstelle implementiert ist und wie Collector - Daten von Netzwerksystemen, wie beispielsweise Datenbanken oder Webservern, aufgebaut sind.

Bei der Implementierung eines hierzu alternativen oder ergänzenden genutzten statischen Algorithmus wird die Aussage basierend auf der Erfüllung von Regeln getroffen. Problematisch dabei ist die Ungenauigkeit, da nicht alle Möglichkeiten abgedeckt sind. Diese Algorithmen können jedoch über die Zeit um immer mehr Aspekte erweitert werden.

Des Weiteren ist es denkbar, den Klassifizierungsschritt wie bisher mittels menschlicher Analyse durchführen zu lassen: Bei dieser Alternative wird ein Mensch benötigt, der sich die Antwort des potentiellen Endpunktes anschaut und anhand dessen entscheidet, ob es sich um eine Anwendungsschnittstelle handelt oder nicht. Es kann von Vorteil sein, beispielsweise bei nicht eindeutigen Klassifizierungsergebnissen, die menschliche Analyse zusätzlich heran zu ziehen.

Nachdem die Machine Learning Algorithmen trainiert wurden, sieht ein bevorzugter Vorgang wie folgt aus.

Im ersten Schritt wird durch den Anwendungsschnittstellen - Generator eine Netzwerk Adresse eines potentiell neuen Anwendungsschnittstellen - Endpunkts generiert.

Im zweiten Schritt übernimmt der Collector die generierte Netzwerk - Adresse, fragt sie an und die hierbei erhobenen Daten werden speichert.

Im dritten Schritt verwendet der Klassifizierer die erhobenen Daten und klassifiziert diese als entweder "Anwendungsschnittstelle" oder "keine Anwendungsschnittstelle".

Die Schritte zwei und drei können dann nach Belieben mit anderen, vom Anwendungsschnittstellen - Generator generierten Netzwerk - Adressen potentieller Anwendungsschnittstellen - Endpunkts wiederholt werden. Natürlich ist es möglich, die jeweiligen Schritte blockweise ab zu arbeiten, also zuerst eine Vielzahl von Netzwerk - Adressen potentieller Anwendungsschnittstellen - Endpunkte zu generieren und diese dann weiter zu prozessieren.

## Patentansprüche

1. Verfahren zum Erkennen eines Anwendungsschnittstellen - Endpunktes wobei die Netzwerk - Adresse eines potentiellen Anwendungsschnittstellen - Endpunkts erzeugt wird, wobei versucht wird, über ein Netzwerkprotokoll zu der erzeugten Netzwerk-Adresse des potentiellen Anwendungsschnittstellen - Endpunkts eine Verbindung aufzubauen und wobei ein Ergebnis des Verbindungsaufbau-Versuchs dahingehend ausgewertet wird, mit welcher Wahrscheinlichkeit die erzeugte Netzwerk - Adresse ein Anwendungsschnittstellen - Endpunkt ist.

2. Verfahren nach Anspruch 1,
**dadurch gekennzeichnet,**
**dass** Muster und/oder Sequenzen bekannter/existierender Anwendungsschnittstellen - Endpunkte zum Erzeugen der Netzwerk - Adresse eines potentiellen Anwendungsschnittstellen - Endpunkts genutzt werden.

3. Verfahren nach Anspruch 2,
**dadurch gekennzeichnet,**
**dass** die Netzwerk - Adresse eines potentiellen Anwendungsschnittstellen - Endpunkts von einem ersten Machine Learning Algorithmus, insbesondere von einem LSTM - Algorithmus, erzeugt wird.

4. Verfahren nach Anspruch 3,
**dadurch gekennzeichnet,**
**dass** als Trainingsdaten für den ersten Machine Learning Algorithmus Daten existierender Anwendungsschnittstellen - Endpunkte genutzt werden.

5. Verfahren nach einem der Ansprüche 2 bis 4,
**dadurch gekennzeichnet,**
**dass** die Muster und/oder Sequenzen bekannter/existierender Anwendungsschnittstellen - Endpunkte auf eine Anwendung und/oder ein Netzwerk eines Unternehmens angepasst werden.

6. Verfahren nach Anspruch 1,
**dadurch gekennzeichnet,**
**dass** zum Erzeugen der Netzwerk - Adresse eines potentiellen Anwendungsschnittstellen - Endpunkts ein Teil der Netzwerk-Adresse anhand einer Liste von Wörtern bestimmt wird, wobei versucht wird, über ein Netzwerkprotokoll zu dem bestimmten Teil der Netzwerk - Adresse eine Verbindung aufzubauen und wobei die Liste von Wörtern insbesondere auf eine Anwendung und/oder ein Unternehmen angepasst wird.

7. Verfahren nach Anspruch 6,
**dadurch gekennzeichnet,**
**dass** bei einer empfangenen Antwort auf den Verbindungsaufbau - Versuch zu dem Teil der Netzwerk - Adresse versucht wird, auf den Teil der Netzwerk - Adresse rekursiv aufbauend die Netzwerk - Adresse eines potentiellen Anwendungsschnittstellen - Endpunkts zu erzeugen.

8. Verfahren nach einem der vorherigen Ansprüche,
**dadurch gekennzeichnet,**
**dass** das Ergebnis des Verbindungsaufbau - Versuchs, insbesondere eine Antwort des potentiellen Anwendungsschnittstellen - Endpunktes auf den Verbindungsaufbau - Versuch, gespeichert wird.

9. Verfahren nach einem der vorherigen Ansprüche,
**dadurch gekennzeichnet,**
**dass** zur Bestimmung der Wahrscheinlichkeit ein zweiter Machine Learning Algorithmus, insbesondere ein Feed - Forward Neural Network, genutzt wird.

10. Verfahren nach Anspruch 9,
**dadurch gekennzeichnet,**
**dass** als Trainingsdaten für den zweiten Machine Learning Algorithmus Daten existierender Anwendungsschnittstellen - Endpunkte und Daten von Endpunkten, die keine Anwendungsschnittstelle bereitstellen, genutzt werden.

11. Verfahren nach einem der Ansprüche 1 bis 8,
**dadurch gekennzeichnet,**
**dass** die Wahrscheinlichkeit von einem auf Regeln basierten statischen Algorithmus bestimmt wird.

12. System zur Durchführung des Verfahrens nach einem der Ansprüche 1 bis 11,
**aufweisend,**
- einen Anwendungsschnittstellen - Generator zur Erzeugung der Netzwerk-Adresse des potentiellen Anwendungsschnittstellen - Endpunkts,
- einen Collector zum Aufbauen der Verbindung zu der erzeugten Netzwerk-Adresse des potentiellen Anwendungsschnittstellen - Endpunkts über ein Netzwerkprotokoll, und
- einen Klassifizierer zum Auswerten des Ergebnisses des Verbindungsaufbau-Versuchs dahingehenden, mit welcher Wahrscheinlichkeit die erzeugte Netzwerk - Adresse ein Anwendungsschnittstellen - Endpunkt ist.
